# EUROPEAN PATENT APPLICATION

(11) **EP 3 088 632 A1**
(43) Date of publication of application: **02.11.2016**
(21) Application number: 14873342.1
(22) Date of filing: 23.12.2014
(51) Int. Cl.: E04F 15/12

(54) **ANTI-SLIP FLOORING MATERIAL, METHOD FOR MANUFACTURING ANTI-SLIP FLOORING MATERIAL, AND METHOD FOR CONSTRUCTING FLOOR BY USING ANTI-SLIP FLOORING MATERIAL**

(30) Priority: 23.12.2013 KR 20130161310; 23.05.2014 KR 20140061967
(71) Applicant: Two H Chem Ltd., Goesan-gun, Chungcheongbuk-do 367-801 (KR)
(72) Inventor: CHUNG, Hwayoung, Seongnam-si Gyeonggi-do 463-797 (KR); HWANG, Seokhwan, Cheongju-si Chungcheongbuk-do 363-787 (KR); NOH, Taejoon, Anyang-si Gyeonggi-do 430-726 (KR); YUN, Kangjae, Suwon-si Gyeonggi-do 442-872 (KR)
(74) Representative: Ter Meer Steinmeister & Partner
(86) International application number: PCT/KR2014/012756
(87) International publication number: WO 2015/099423

(57) **Abstract**

Disclosed are an anti-slip flooring material, a method of manufacturing the anti-slip flooring material, and a method of constructing a floor using the anti-slip flooring material. The anti-slip flooring material includes a polyolefin powder, the polyolefin powder being coated with silane. The anti-slip flooring material also includes: a base for a flooring material, including a polyolefin powder and a polymer for a flooring material, and a curing agent for a flooring material, including a polymer curing agent, wherein the polyolefin powder is coated with silane. The method of manufacturing the anti-slip flooring material includes: forming a polyolefin powder by grinding a polyolefin pellet and coating the polyolefin powder with silane. The method of constructing a floor using the anti-slip flooring material includes forming an anti-slip layer by applying, on the floor, the anti-slip flooring material including a polyolefin powder coated with silane.

## Description

### Technical Field

The present invention relates to an anti-slip flooring material, a method of manufacturing the anti-slip flooring material, and a method of constructing a floor using the anti-slip flooring material.

### Background Art

With industrial advancement, the use of floor paint to achieve cleanliness and beautiful finishes in a variety of living and working environments is drastically increasing, and floors are constructed using epoxy or urethane floor paint to protect concrete floor surfaces of concrete buildings and realize exterior finishes after completion of construction of concrete buildings, such as parking lots, hospitals, schools, department stores, etc. Floor paint enables the comfortable and stable driving of vehicles or walking of pedestrians who access such buildings from time to time and functions to prevent leakage of the concrete floor surface from rain, etc.

A floor on which the epoxy or urethane floor paint is applied may become slippery due to a water film formed by moisture and oil, undesirably causing accidents that threaten the safety of pedestrians and drivers. In particular, moisture and oil may be always present on floors of parking lots, factories, food processing plants, kitchens, gas stations, swimming pools, ships, bathrooms and the like, and disasters caused by slippage accidents frequently take place. Furthermore, the surface of the coating film formed using the epoxy or urethane floor paint is problematic in that unpleasant frictional noise may occur when walking or driving on such a floor.

With the goal of solving these problems, floors have been constructed using a mixture comprising paint and a high-hardness silica powder, but the high-hardness silica powder, having a high specific gravity, suffers from complicated construction processes and poor durability.

### Disclosure

### Technical Problem

Accordingly, the present invention has been made keeping in mind the above problems encountered in the related art, and an object of the present invention is to provide an anti-slip flooring material having superior anti-slip performance and high durability.

Another object of the present invention is to provide a method of manufacturing the anti-slip flooring material.

Still another object of the present invention is to provide a method of constructing a floor using the anti-slip flooring material including a polyolefin powder coated with silane.

Yet another object of the present invention is to provide a method of constructing a floor, which is simple.

The other objects of the present invention will be clearly understood through the following description in conjunction with the appended drawings.

### Technical Solution

An embodiment of the present invention provides an anti-slip flooring material, comprising a polyolefin powder, wherein the polyolefin powder is coated with silane.

The polyolefin may include at least one selected from among polyethylene, ultrahigh-molecular-weight polyethylene, low-density polyethylene, linear low-density polyethylene, high-density polyethylene, and polypropylene.

The polyolefin powder may have a particle size of 30 to 1,000 µm.

The silane may include at least one selected from among dimethyldimethoxysilane, methyltrimethoxysilane, methyltriethoxysilane, and tetraethoxysilane.

Another embodiment of the present invention provides an anti-slip flooring material, comprising a base for a flooring material, comprising a polyolefin powder and a polymer for a flooring material; and a curing agent for a flooring material, comprising a polymer curing agent, wherein the polyolefin powder is coated with silane.

The polyolefin may include at least one selected from among polyethylene, ultrahigh-molecular-weight polyethylene, low-density polyethylene, linear low-density polyethylene, high-density polyethylene, and polypropylene.

The polyolefin powder may have a particle size of 30 to 1,000 µm.

The silane may include at least one selected from among dimethyldimethoxysilane, methyltrimethoxysilane, methyltriethoxysilane, and tetraethoxysilane.

The polymer for a flooring material may include at least one selected from among an epoxy resin, a urethane resin, an acryl resin, and an MMA resin, and the polymer curing agent may include at least one selected from among an epoxy curing agent, a urethane curing agent, an acryl curing agent, and an MMA curing agent.

The base for a flooring material may be contained in an amount of 70 to 90 wt% and the curing agent for a flooring material may be contained in an amount of 10 to 30 wt%, based on the total weight of the anti-slip flooring material.

The polyolefin powder may be contained in an amount of 3 to 30 wt% based on the total weight of the base for a flooring material.

Still another embodiment of the present invention provides a method of manufacturing an anti-slip flooring material, comprising: forming a polyolefin powder by grinding a polyolefin pellet; and coating the polyolefin powder with silane.

The polyolefin may include at least one selected from among polyethylene, ultrahigh-molecular-weight polyethylene, low-density polyethylene, linear low-density polyethylene, high-density polyethylene, and polypropylene.

The polyolefin pellet may be ground through cryomilling using a liquefied nitrogen gas.

The coating of the polyolefin powder may be performed by mixing 100 parts by weight of the polyolefin powder and 0.1 to 20 parts by weight of the silane and then carrying out high-speed dispersion.

The method may further include mixing the polyolefin powder, coated with silane, with a polymer for a flooring material and a polymer curing agent.

The polymer for a flooring material may include at least one selected from among an epoxy resin, a urethane resin, an acryl resin, and an MMA resin, and the polymer curing agent may include at least one selected from among an epoxy curing agent, a urethane curing agent, an acryl curing agent, and an MMA curing agent.

Yet another embodiment of the present invention provides a method of constructing a floor using an anti-slip flooring material, comprising: forming an anti-slip layer by applying, on a floor, the anti-slip flooring material including a polyolefin powder coated with silane.

Yet still another embodiment of the present invention provides a method of constructing a floor using an anti-slip flooring material, comprising: forming an anti-slip layer by applying, on a floor, the anti-slip flooring material including a base for a flooring material, comprising a polyolefin powder coated with silane and a polymer for a flooring material, and a curing agent for a flooring material, comprising a polymer curing agent.

The method of constructing the floor may further include forming a bottom coating film on the floor before forming the anti-slip layer, and forming a top coating film on the anti-slip layer, wherein the anti-slip layer is provided as a coating layer having a thickness of 50 to 80 µm through one coating process, or is provided as a coating layer having a thickness of 100 to 160 µm through two coating processes.

The method of constructing the floor may further include forming a bottom coating film on the floor before forming the anti-slip layer, wherein the anti-slip layer is provided as a lining having a thickness of 1 to 3 mm through one coating process.

The anti-slip flooring material may be applied on the floor through at least one process selected from among roller coating, air spraying, and airless spraying.

The airless spraying may be performed using an airless sprayer having a nozzle with a tip diameter of 1.0 to 3.0 mm, and the airless sprayer may discharge the anti-slip flooring material at a pressure of 500 to 3,300 psi and may have a motor power of 4 to 10 HP.

The polyolefin may include at least one selected from among polyethylene, ultrahigh-molecular-weight polyethylene, low-density polyethylene, linear low-density polyethylene, high-density polyethylene, and polypropylene.

The polyolefin powder may have a particle size of 30 to 1,000 µm.

The silane may include at least one selected from among dimethyldimethoxysilane, methyltrimethoxysilane, methyltriethoxysilane, and tetraethoxysilane.

The polymer for a flooring material may include at least one selected from among an epoxy resin, a urethane resin, an acryl resin, and an MMA resin, and the polymer curing agent may include at least one selected from among an epoxy curing agent, a urethane curing agent, an acryl curing agent, and an MMA curing agent.

The base for a flooring material may be contained in an amount of 70 to 90 wt% and the curing agent for a flooring material may be contained in an amount of 10 to 30 wt%, based on the total weight of the anti-slip flooring material.

The polyolefin powder may be contained in an amount of 3 to 30 wt%, based on the total weight of the base for a flooring material.

### Advantageous Effects

According to embodiments of the present invention, the anti-slip flooring material includes a polyolefin powder coated with silane. The polyolefin powder coated with silane has low specific gravity and high compatibility with a floor paint component to thus improve dispersibility in the paint. Also, such a powder can move toward the surface of a coating film in the coating process, thus enabling embossments to be easily formed on the surface of the coating film even without the need for additional processing. Furthermore, since agglomeration of the polyolefin powder in the paint can be prevented, embossments can be uniformly formed on the surface of the coating film. The polyolefin powder coated with silane is increased in durability to thereby prevent particles from escaping from the formed coating film, and moreover, slipping can be prevented because the coefficient of friction thereof is increased on the surface of the coating film, and frictional noise can be reduced upon walking or driving because the contact area thereof with the floor surface is decreased. Furthermore, the polyolefin powder can be formed using cryomilling. Here, cryomilling is not a chemical grinding process using an organic solvent, but is simple, entails no concern about residual organic solvent, and incurs low processing cost.

According to embodiments of the present invention, the method of constructing a floor includes applying the anti-slip flooring material including a polyolefin powder coated with silane using a roller coating process, an air spraying process, or an airless spraying process, and thus is simple, obviates additional processing, and enables rapid application on a large area using a small workforce.

### Description of Drawings

FIG. 1 is a flowchart schematically illustrating the process of manufacturing an anti-slip flooring material according to an embodiment of the present invention; and
FIGS. 2a and 2b illustrate the process of constructing a floor according to embodiments of the present invention.

### Best Mode

Hereinafter, a detailed description will be given of the present invention with reference to the following embodiments. The purposes, features, and advantages of the present invention will be easily understood through the following embodiments. The present invention is not limited to such embodiments, but may be modified in other forms. The embodiments herein are provided such that the spirit of the present invention may be sufficiently transferred to those skilled in the art to which the present invention belongs. Therefore, the following embodiments are not to be construed as limiting the present invention.

As used herein, the term "anti-slip flooring material" includes a floor paint or the like, which is applied onto the floor so as to realize anti-slip performance, and the configuration hereof is not limited.

### [Anti-Slip Flooring Material]

According to an embodiment of the present invention, the anti-slip flooring material includes a polyolefin powder coated with silane. According to another embodiment of the present invention, the anti-slip flooring material includes a base for a flooring material, comprising a polyolefin powder coated with silane and a polymer for a flooring material, and a curing agent for a flooring material comprising a polymer curing agent.

The polyolefin powder may include at least one selected from among a polyethylene powder, an ultrahigh-molecular-weight polyethylene powder, a low-density polyethylene powder, a linear low-density polyethylene powder, a high-density polyethylene powder, and a polypropylene powder.

The polyolefin powder may have a particle size of 30 to 1,000 µm. If the particle size of the polyolefin powder is less than 30 µm, the anti-slip effect may decrease due to the particle size being small. On the other hand, if the particle size thereof exceeds 1,000 µm, the polyolefin particles may escape from the coating film due to friction and the like after the formation of the coating film.

Examples of the silane may include dimethyldimethoxysilane, methyltrimethoxysilane, methyltriethoxysilane, and tetraethoxysilane. The polyolefin powder coated with silane has low specific gravity and high compatibility with the floor paint component, thus increasing dispersibility in the paint. Furthermore, in the coating process, this powder may move toward the surface of the coating film to thus easily form embossments on the surface of the coating film, even without the need for additional processing. Also, agglomeration of the polyolefin powder in the paint may be prevented, thus uniformly forming embossments on the surface of the coating film. The polyolefin powder coated with silane is improved in durability, thus preventing the particles from escaping from the formed coating film. Moreover, the coefficient of friction of the surface of the coating film may increase, thus exhibiting anti-slip performance, and frictional noise may be reduced upon walking or driving because the contact area thereof with the floor surface is small.

Based on the total weight of the base for a flooring material, the amount of the polyolefin powder may be 3 to 30 wt%. If the amount of the polyolefin powder is less than 3 wt%, embossments may not be efficiently formed on the surface of the coating film, thus deteriorating the anti-slip effect. On the other hand, if the amount thereof exceeds 30 wt%, the viscosity of the paint is increased, making it difficult to efficiently perform the coating process.

The polymer for a flooring material is not limited, but may include at least one selected from among an epoxy resin, a urethane resin, an acryl resin, and an MMA resin, taking into consideration the compatibility with silane. The polymer curing agent may include at least one selected from among an epoxy curing agent, a urethane curing agent, an acryl curing agent, and an MMA curing agent. The epoxy curing agent may include a polyamide-based curing agent, the urethane curing agent may include an isocyanate-based curing agent, and the acryl curing agent and the MMA curing agent may include at least one selected from among a peroxide-based curing agent, an ester-based curing agent, and an azo compound-based curing agent.

Based on the total weight of the anti-slip flooring material, the amount of the base for a flooring material may be 70 to 90 wt%, and the amount of the curing agent for a flooring material may be 10 to 30 wt%.

The anti-slip flooring material may further include a pigment component. The pigment component plays a role in imparting a color, and may include, for example, lead chromate, iron oxide, etc.

### [Method of Manufacturing Anti-Slip Flooring Material]

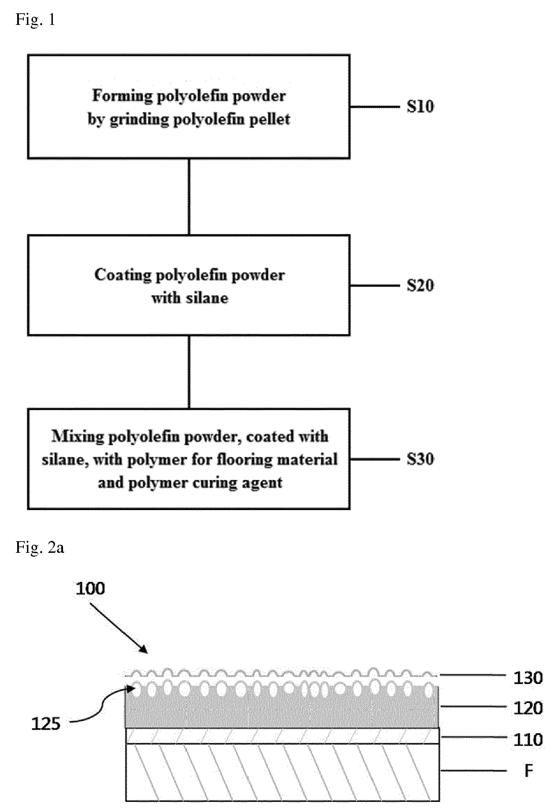

FIG. 1 is a flowchart schematically illustrating the process of manufacturing the anti-slip flooring material according to an embodiment of the present invention.

As illustrated in FIG. 1, the method of manufacturing the anti-slip flooring material may include forming a polyolefin powder by grinding a polyolefin pellet (S10), coating the polyolefin powder with silane (S20), and mixing the polyolefin powder, coated with silane, with a polymer for a flooring material and a polymer curing agent (S30).

The polyolefin pellet is ground, thus forming a polyolefin powder (S10).

The polyolefin pellet may include at least one selected from among a polyethylene pellet, an ultrahigh-molecular-weight polyethylene pellet, a low-density polyethylene pellet, a linear low-density polyethylene pellet, a high-density polyethylene pellet, and a polypropylene pellet.

The polyolefin pellet may be ground through cryomilling at a temperature equal to or lower than -100°C using a liquefied nitrogen gas. Thereby, the polyolefin pellet having a size of 3 to 5 mm is ground in a spherical or polygonal shape, thus forming a polyolefin powder having a particle size of 1 to 1,500 µm. Cryomilling is not a chemical grinding process using an organic solvent, but is simple, entails no concern about residual organic solvent, and incurs low processing cost.

The ground polyolefin powder may be sorted into a polyolefin powder having a particle size of 30 to 1,000 µm. If the particle size of the polyolefin powder is less than 30 µm, the anti-slip effect may decrease due to the small particle size. On the other hand, if the particle size thereof exceeds 1,000 µm, the polyolefin particles may escape from the coating film due to friction, etc. after the formation of the coating film.

The polyolefin powder is coated with silane (S20).

The surface of the polyolefin powder, sorted to a particle size of 30 to 1,000 µm, is coated with silane. The silane may be exemplified by dimethyldimethoxysilane, methyltrimethoxysilane, methyltriethoxysilane, and tetraethoxysilane. The coating process may be performed by mixing 100 parts by weight of the polyolefin powder and 0.1 to 20 parts by weight of the silane and then dispersing the resulting mixture at a high speed. If the amount of silane is less than 0.1 parts by weight, the coating effect may become insignificant due to the low silane content. On the other hand, if the amount thereof exceeds 20 parts by weight, it is much higher than the amount necessary for the coating process, thus negating economic benefits.

The polyolefin powder, coated with silane, is mixed with a polymer for a flooring material and a polymer curing agent (S30).

The polymer for a flooring material is not limited, but may include at least one selected from among an epoxy resin, a urethane resin, an acryl resin, and an MMA resin, in consideration of the compatibility with silane. The polymer curing agent may include at least one selected from among an epoxy curing agent, a urethane curing agent, an acryl curing agent, and an MMA curing agent. The epoxy curing agent may include a polyamide-based curing agent, the urethane curing agent may include an isocyanate-based curing agent, and the acryl curing agent and the MMA curing agent may include at least one selected from among a peroxide-based curing agent, an ester-based curing agent, and an azo compound-based curing agent.

Based on the total weight of the anti-slip flooring material, the base for a flooring material, comprising the polyolefin powder coated with silane and the polymer for a flooring material, may be used in an amount of 70 to 90 wt%, and the curing agent for a flooring material, comprising the polymer curing agent, may be used in an amount of 10 to 30 wt%.

The base for a flooring material may further include a pigment component. The pigment component imparts a color thereto, and may include lead chromate, iron oxide, etc.

The mixing may be performed using a stirrer or a dissolver. The mixing process is not limited, but may be carried out by, for example, mixing the polyolefin powder coated with silane and the polymer for a flooring material and adding the resulting mixture with the polymer curing agent, or by combining the polyolefin powder, the polymer for a flooring material, and the polymer curing agent together.

### [Examples]

### Example 1

An ultrahigh-molecular-weight polyethylene pellet was cryomilled, after which an ultrahigh-molecular-weight polyethylene powder having an average particle size of 300 µm was sorted. 100 parts by weight of the ultrahigh-molecular-weight polyethylene powder and 5 parts by weight of methyltrimethoxysilane were mixed and dispersed at a high speed, thus forming an ultrahigh-molecular-weight polyethylene powder coated with silane. The ultrahigh-molecular-weight polyethylene powder coated with silane was added to an epoxy resin and stirred at a rate of 500 rpm for 10 min, thus yielding a base for a flooring material. The ultrahigh-molecular-weight polyethylene powder coated with silane was added in an amount of 6 wt% based on the total weight of the base for a flooring material. The base for a flooring material and an epoxy curing agent, that is, polyamide, were mixed at a weight ratio of 5:1, thereby manufacturing an anti-slip flooring material (a floor paint).

### Example 2

An ultrahigh-molecular-weight polyethylene pellet was cryomilled, after which an ultrahigh-molecular-weight polyethylene powder having an average particle size of 1,000 µm was sorted. 100 parts by weight of the ultrahigh-molecular-weight polyethylene powder and 5 parts by weight of methyltrimethoxysilane were mixed and dispersed at a high speed, thus forming an ultrahigh-molecular-weight polyethylene powder coated with silane. The ultrahigh-molecular-weight polyethylene powder coated with silane was added to an epoxy resin and stirred at a rate of 500 rpm for 10 min, thus yielding a base for a flooring material. The ultrahigh-molecular-weight polyethylene powder coated with silane was added in an amount of 6 wt% based on the total weight of the base for a flooring material. The base for a flooring material and an epoxy curing agent, that is, polyamide, were mixed at a weight ratio of 5:1, thereby manufacturing an anti-slip flooring material (a floor paint).

### Example 3

An ultrahigh-molecular-weight polyethylene pellet was cryomilled, after which an ultrahigh-molecular-weight polyethylene powder having an average particle size of 30 µm was sorted. 100 parts by weight of the ultrahigh-molecular-weight polyethylene powder and 5 parts by weight of methyltrimethoxysilane were mixed and dispersed at a high speed, thus forming an ultrahigh-molecular-weight polyethylene powder coated with silane. The ultrahigh-molecular-weight polyethylene powder coated with silane was added to an epoxy resin and stirred at a rate of 500 rpm for 10 min, thus yielding a base for a flooring material. The ultrahigh-molecular-weight polyethylene powder coated with silane was added in an amount of 6 wt% based on the total weight of the base for a flooring material. The base for a flooring material and an epoxy curing agent, that is, polyamide, were mixed at a weight ratio of 5:1, thereby manufacturing an anti-slip flooring material (a floor paint).

### Comparative Example 1

A flooring material (a floor paint) was formed by mixing an epoxy resin and an epoxy curing agent, that is, polyamide, at a weight ratio of 5:1.

### Comparative Example 2

An ultrahigh-molecular-weight polyethylene pellet was cryomilled, after which an ultrahigh-molecular-weight polyethylene powder having an average particle size of 300 µm was sorted. The ultrahigh-molecular-weight polyethylene powder was added to an epoxy resin and stirred at 500 rpm for 10 min, thus forming a base for a flooring material. The ultrahigh-molecular-weight polyethylene powder was added in an amount of 6 wt% based on the total weight of the base for a flooring material. The base for a flooring material and an epoxy curing agent, that is, polyamide, were mixed at a weight ratio of 5:1, thereby manufacturing a flooring material (a floor paint).

The flooring materials (floor paints) of Examples 1 to 3 and Comparative Examples 1 and 2 were measured for slip resistance and Izod impact strength. The results are shown in Table 1 below. The slip resistance was measured through the testing method based on KS F 2375, and the Izod impact strength was measured through the testing method based on ASTM D 256.

**[Table 1]**

| | Ex.1 | Ex.2 | Ex.3 | C.Ex.1 | C.Ex.2 |
|---|---|---|---|---|---|
| Slip Resistance (BPN) | 40 | 48 | 32 | 18 | 40 |
| Izod Impact strength (kg·cm/cm²) | 9.2 | 8.8 | 9.6 | 11.2 | 7.2 |

As is apparent from Table 1, the flooring materials of Examples 1 to 3, including the polyethylene powder coated with silane, were superior in slip resistance compared to the flooring material of Comparative Example 1, which lacked the polyethylene powder, and exhibited higher Izod impact strength than that of the flooring material of Comparative Example 2, in which the polyethylene powder was included but was not coated with silane.

### [Method of Constructing Floor using Anti-Slip Flooring Material]

According to an embodiment of the present invention, the method of constructing a floor may include forming an anti-slip layer by applying, on a floor, the anti-slip flooring material including a polyolefin powder coated with silane. Also, according to another embodiment of the present invention, the method of constructing a floor may include forming an anti-slip layer by applying, on a floor, the anti-slip flooring material including a base for a flooring material, comprising a polyolefin powder coated with silane and a polymer for a flooring material, and a curing agent for a flooring material, comprising a polymer curing agent. The polymer for a flooring material may include at least one selected from among an epoxy resin, a urethane resin, an acryl resin, and an MMA resin, and the polymer curing agent may include at least one selected from among an epoxy curing agent, a urethane curing agent, an acryl curing agent, and an MMA curing agent. Based on the total weight of the anti-slip flooring material, the base for a flooring material may be contained in an amount of 70 to 90 wt%, and the curing agent for a flooring material may be contained in an amount of 10 to 30 wt%. Based on the total weight of the base for a flooring material, the polyolefin powder may be contained in an amount of 3 to 30 wt%.

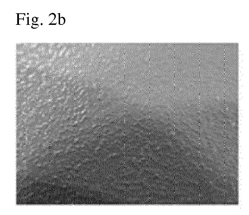

FIGS. 2a and 2b illustrate the process of constructing the floor according to embodiments of the present invention. FIG. 2a illustrates the entire structure of the coating film formed by the process of constructing the floor, and FIG. 2b is an actual image of the formed coating film.

As illustrated in FIGS. 2a and 2b, the coating film 100 constructed on the floor F may be provided in the form of a multilayer structure, comprising a bottom coating film 110, a middle coating film 120, and a top coating film 130.

The middle coating film 120 is an anti-slip layer formed by applying the anti-slip flooring material including a polyolefin powder coated with silane. The anti-slip layer may be provided as a coating layer having a thickness of 50 to 80 µm through one coating process, or a coating layer having a thickness of 100 to 160 µm through two coating processes. The anti-slip layer may be provided as a lining having a thickness of 1 to 3 mm through one coating process. When this anti-slip layer is provided in the form of a lining, the top coating film 130 may not be formed.

The anti-slip flooring material may be applied on the bottom coating film 110 using any one process selected from among roller coating, air spraying, and airless spraying.

The nozzle of the airless sprayer preferably has a tip diameter of 1.0 to 3.0 mm, which is larger than the tip diameter (0.3 to 1.0 mm) of a nozzle for use in applying a conventional flooring material containing no polyolefin powder. Further, the airless sprayer preferably has a motor power of 4 to 10 HP, which is greater than the motor power (0.6 to 2) for use in applying a conventional flooring material having no polyolefin powder. The pressure at which the anti-slip flooring material is discharged by the airless sprayer may fall in the range of 500 to 3,300 psi.

The polyolefin may include at least one selected from among polyethylene, ultrahigh-molecular-weight polyethylene, low-density polyethylene, linear low-density polyethylene, high-density polyethylene, and polypropylene. The polyolefin powder may have a particle size of 30 to 1,000 µm. The silane may include at least one selected from among dimethyldimethoxysilane, methyltrimethoxysilane, methyltriethoxysilane, and tetraethoxysilane.

The anti-slip flooring material may be rapidly applied on a large area using a small workforce through a simple construction process using roller coating, air spraying, or airless spraying. The polyolefin powder 125 coated with silane has low specific gravity and high compatibility with an epoxy resin to thus exhibit high dispersibility, and may thereby be uniformly distributed in the anti-slip flooring material. Furthermore, in the coating process, this powder may move toward the upper surface of the middle coating film 120 to thus form embossments on the surface of the coating film 100. The coefficient of friction of the surface of the coating film 100 may be increased by the polyolefin powder 125 coated with silane, thus preventing slipping. Moreover, the polyolefin powder 125 coated with silane has high durability, and may thus manifest anti-slip effects for a long period of time.

Although the embodiments of the present invention have been disclosed for illustrative purposes, those skilled in the art will appreciate that the present invention may be embodied in other specific ways without changing the technical spirit or essential features thereof. Therefore, the embodiments disclosed in the present invention are not restrictive but are illustrative. The scope of the present invention is given by the claims, rather than the specification, and also contains all modifications within the meaning and range equivalent to the claims.

### Industrial Applicability

According to embodiments of the present invention, the anti-slip flooring material includes a polyolefin powder coated with silane. The polyolefin powder coated with silane has low specific gravity and high compatibility with a floor paint component to thus improve dispersibility in the paint, and also, it can move toward the surface of a coating film in the coating process, thus enabling embossments to be easily formed on the surface of the coating film without the need for additional processing. Furthermore, since agglomeration of the polyolefin powder in the paint can be prevented, embossments can be uniformly formed on the surface of the coating film. The polyolefin powder coated with silane is increased in durability to thereby prevent particles from escaping from the formed coating film, and also, slipping can be prevented because the coefficient of friction of the surface of the coating film is increased, and frictional noise can be reduced upon walking or driving because the contact area thereof with the floor surface is decreased. Moreover, the polyolefin powder can be formed using cryomilling. Here, cryomilling is not a chemical grinding process using an organic solvent, but is simple, entails no concern about residual organic solvent, and incurs low processing cost.

According to embodiments of the present invention, the method of constructing a floor includes applying the anti-slip flooring material including a polyolefin powder coated with silane, using a roller coating process, an air spraying process, or an airless spraying process, and thus the construction method is simple, obviates additional processing, and enables rapid application on a large area using a small workforce.

## Claims

1. An anti-slip flooring material, comprising:
a polyolefin powder,
wherein the polyolefin powder is coated with silane.

2. The anti-slip flooring material of claim 1, wherein the polyolefin comprises at least one selected from among polyethylene, ultrahigh-molecular-weight polyethylene, low-density polyethylene, linear low-density polyethylene, high-density polyethylene, and polypropylene.

3. The anti-slip flooring material of claim 1, wherein the polyolefin powder has a particle size of 30 to 1,000 µm.

4. The anti-slip flooring material of claim 1, wherein the silane comprises at least one selected from among dimethyldimethoxysilane, methyltrimethoxysilane, methyltriethoxysilane, and tetraethoxysilane.

5. An anti-slip flooring material, comprising:
a base for a flooring material, comprising a polyolefin powder and a polymer for a flooring material; and
a curing agent for a flooring material, comprising a polymer curing agent,
wherein the polyolefin powder is coated with silane.

6. The anti-slip flooring material of claim 5, wherein the polyolefin powder has a particle size of 30 to 1,000 µm.

7. The anti-slip flooring material of claim 5, wherein the polyolefin powder has a particle size of 30 to 1,000 µm.

8. The anti-slip flooring material of claim 5, wherein the silane comprises at least one selected from among dimethyldimethoxysilane, methyltrimethoxysilane, methyltriethoxysilane, and tetraethoxysilane.

9. The anti-slip flooring material of claim 5, wherein the polymer for a flooring material comprises at least one selected from among an epoxy resin, a urethane resin, an acryl resin, and an MMA resin, and
the polymer curing agent comprises at least one selected from among an epoxy curing agent, a urethane curing agent, an acryl curing agent, and an MMA curing agent.

10. The anti-slip flooring material of claim 5, wherein the base for a flooring material is contained in an amount of 70 to 90 wt% and the curing agent for a flooring material is contained in an amount of 10 to 30 wt%, based on a total weight of the anti-slip flooring material.

11. The anti-slip flooring material of claim 5, wherein the polyolefin powder is contained in an amount of 3 to 30 wt% based on a total weight of the base for a flooring material.

12. A method of manufacturing an anti-slip flooring material, comprising:
forming a polyolefin powder by grinding a polyolefin pellet; and
coating the polyolefin powder with silane.

13. The method of claim 12, wherein the polyolefin comprises at least one selected from among polyethylene, ultrahigh-molecular-weight polyethylene, low-density polyethylene, linear low-density polyethylene, high-density polyethylene, and polypropylene.

14. The method of claim 12, wherein the polyolefin pellet is ground through cryomilling using a liquefied nitrogen gas.

15. The method of claim 12, wherein the coating of the polyolefin powder is performed by mixing 100 parts by weight of the polyolefin powder and 0.1 to 20 parts by weight of the silane and then carrying out high-speed dispersion.

16. The method of claim 12, further comprising mixing the polyolefin powder, coated with silane, with a polymer for a flooring material and a polymer curing agent.

17. The method of claim 16, wherein the polymer for a flooring material comprises at least one selected from among an epoxy resin, a urethane resin, an acryl resin, and an MMA resin, and
the polymer curing agent comprises at least one selected from among an epoxy curing agent, a urethane curing agent, an acryl curing agent, and an MMA curing agent.

18. A method of constructing a floor using an anti-slip flooring material, comprising:
forming an anti-slip layer by applying, on a floor, the anti-slip flooring material including a polyolefin powder coated with silane.

19. A method of constructing a floor using an anti-slip flooring material, comprising:
forming an anti-slip layer by applying, on a floor, the anti-slip flooring material including a base for a flooring material, comprising a polyolefin powder coated with silane and a polymer for a flooring material, and a curing agent for a flooring material, comprising a polymer curing agent.

20. The method of claim 18 or 19, further comprising:
forming a bottom coating film on the floor before forming the anti-slip layer, and
forming a top coating film on the anti-slip layer,
wherein the anti-slip layer is provided as a coating layer having a thickness of 50 to 80 µm through one coating process, or is provided as a coating layer having a thickness of 100 to 160 µm through two coating processes.

21. The method of claim 18 or 19, further comprising:
forming a bottom coating film on the floor before forming the anti-slip layer,
wherein the anti-slip layer is provided as a lining having a thickness of 1 to 3 mm through one coating process.

22. The method of claim 18 or 19, wherein the anti-slip flooring material is applied on the floor through at least one process selected from among roller coating, air spraying, and airless spraying.

23. The method of claim 22, wherein the airless spraying is performed using an airless sprayer having a nozzle with a tip diameter of 1.0 to 3.0 mm, and the airless sprayer discharges the anti-slip flooring material at a pressure of 500 to 3,300 psi and has a motor power of 4 to 10 HP.

24. The method of claim 18 or 19, wherein the polyolefin comprises at least one selected from among polyethylene, ultrahigh-molecular-weight polyethylene, low-density polyethylene, linear low-density polyethylene, high-density polyethylene, and polypropylene.

25. The method of claim 18 or 19, wherein the polyolefin powder has a particle size of 30 to 1,000 µm.

26. The method of claim 18 or 19, wherein the silane comprises at least one selected from among dimethyldimethoxysilane, methyltrimethoxysilane, methyltriethoxysilane, and tetraethoxysilane.

27. The method of claim 19, wherein the polymer for a flooring material comprises at least one selected from among an epoxy resin, a urethane resin, an acryl resin, and an MMA resin, and
the polymer curing agent comprises at least one selected from among an epoxy curing agent, a urethane curing agent, an acryl curing agent, and an MMA curing agent.

28. The method of claim 19, wherein the base for a flooring material is contained in an amount of 70 to 90 wt% and the curing agent for a flooring material is contained in an amount of 10 to 30 wt%, based on a total weight of the anti-slip flooring material.

29. The method of claim 28, wherein the polyolefin powder is contained in an amount of 3 to 30 wt%, based on a total weight of the base for a flooring material.
